(19) **Europäisches Patentamt / European Patent Office / Office européen des brevets**

(11) **EP 4 697 643 A1**

(12) **EUROPEAN PATENT APPLICATION**

(43) Date of publication:
**18.02.2026 Bulletin 2026/08**

(51) International Patent Classification (IPC):
***H04L 9/30*** *(2006.01)*

(21) Application number: **24195050.0**

(52) Cooperative Patent Classification (CPC):
**H04L 9/3093;** G06F 7/72; G06F 2207/7233

(22) Date of filing: **16.08.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nagravision Sàrl**
**1033 Cheseaux-sur-Lausanne (CH)**

(72) Inventors:
- **LEFORT, Carine**
  **1033 Cheseaux-sur-Lausanne (CH)**
- **DUPARC, Max**
  **1033 Cheseaux-sur-Lausanne (CH)**
- **VILLEGAS, Karine**
  **1033 Cheseaux-sur-Lausanne (CH)**

(74) Representative: **Novagraaf International SA**
**Chemin de l'Echo 3**
**1213 Onex, Geneva (CH)**

(54) **POST-QUANTUM CRYPTOGRAPHIC OPERATION WITH BLINDED NTT**

(57) The method is for executing a cryptographic operation including a Number Theoretic Transform, NTT, computation that transforms at least one polynomial with N coefficients from a time-domain representation to a frequency-domain representation. The NTT computation is divided into successive stages of butterfly operations that combine coefficients, starting from the N coefficients of the polynomial, up to N transformed coefficients. During each stage, each butterfly operation combines a pair of coefficients using a NTT twiddle factor to progressively transform the coefficients and uses at least one mask-related twiddle factor in such a way that, during all intermediate stages of the NTT computation, the coefficients of each pair of coefficients combined within a butterfly operation are masked with:
- two respective input masks, independent from one another, in input of the butterfly operation;
- a same output mask in output of the butterfly operation, independent from said two input masks,
the at least one mask-related twiddle factor being based on the two input masks and the output mask.

**Fig. 1**

EP 4 697 643 A1

**Description**

TECHNICAL FIELD

The present disclosure relates to a method and computing device for executing cryptographic operations, in particular post-quantum cryptographic operations, said cryptographic operations including a Number Theoretic Transform, NTT, computation applied on one or more polynomials.

BACKGROUND

Cryptography is the practice and study of techniques for securing communication and data from third parties. It involves the use of algorithms to transform information into a secure format that can only be read by someone with the appropriate decryption key. Cryptographic operations are essential for ensuring the confidentiality, integrity, and authenticity of data in various applications, including secure communications, digital signatures, and data encryption.

In the field of cryptography, post-quantum cryptography refers to cryptographic algorithms that are believed to be secure against the potential future threat posed by quantum computers. Quantum computers have the potential to break many of the cryptographic algorithms currently in use, such as RSA and ECC, by efficiently solving problems that are computationally infeasible for classical computers. Lattice-based cryptography is one of the leading candidates for post-quantum cryptographic algorithms due to its strong security guarantees and resistance to quantum attacks.

Lattice-based cryptographic algorithms, including ML-KEM (Modular Lattice Key Encapsulation Mechanism) and ML-DSA (Modular Lattice Digital Signature Algorithm), have emerged as promising candidates for post-quantum cryptography. ML-KEM is a cryptographic algorithm for securely transmitting encryption keys, while ML-DSA is a cryptographic algorithm for creating digital signatures, ensuring data integrity and authenticity. These algorithms are much more complex than previous public cryptography algorithms such as RSA or ECC-based cryptographic algorithms. This complexity results in longer execution times, greater memory requirement, and more intermediate variables. The increased complexity also means more potential points of leakage and more variables susceptible to be considered as target for hackers, making these algorithms more prone to side-channel attacks. This makes securing them more complex and costly.

One of the key components of lattice-based cryptographic schemes is the Number Theoretic Transform (NTT). The NTT is a mathematical transformation used to perform efficient polynomial multiplications in finite fields. It is a generalization of the Discrete Fourier Transform (DFT) and is used to convert polynomials from their time-domain representation to a frequency-domain representation, where polynomial multiplication can be performed more efficiently. The NTT and its inverse (INTT) are essential for the implementation of lattice-based cryptographic schemes, such as CRYSTALS-Kyber (ML-KEM) and CRYSTALS-Dilithium (ML-DSA).

However, the implementation of the NTT in cryptographic schemes is susceptible to side-channel attacks, which exploit information leaked during the execution of cryptographic algorithms to recover secret keys. One of the most significant and effective families of side-channel attacks is the Soft Analytical Side-Channel Attacks (SASCA). SASCA targets the NTT by analyzing power or electromagnetic (EM) traces to extract information about the secret variables involved in the computation. This poses a significant threat to the security of lattice-based cryptographic scheme.

The document "Single-trace side-channel attacks on masked lattice-based encryption" by R. Primas, P. Pessl, and S. Mangard. describes a single-trace side-channel attack on masked lattice-based encryption schemes implemented on the ARM Cortex-M4 microcontroller. The proposed attack requires over a million templates for successful key recovery. The computation inside a Belief Propagation (BP) algorithm is sped up using the Fast Fourier Transform (FFT).

The document "More practical single-trace attacks on the number theoretic transform" by P. Pessl and R. Primas, describes an improved attack on the work presented in the above-presented document, which requires only a hundred templates when the target vector has a small range. This improvement comes at the expense of a slower computation of the BP algorithm.

There is thus a need for a method to secure the NTT against side-channel attacks, particularly SASCA, while maintaining the efficiency and low-cost requirements of lattice-based cryptographic schemes. This method should provide countermeasures that complicate the correlation between side-channel information and the internal computations of the NTT, thereby enhancing the security of the cryptographic implementation.

SUMMARY

The present disclosure concerns a method for executing a cryptographic operation including a Number Theoretic Transform, NTT, computation that transforms at least one polynomial with N coefficients from a time-domain representation to a frequency-domain representation, wherein

- the NTT computation is divided into successive stages of butterfly operations that combine coefficients, starting from the N coefficients of the polynomial, up to N transformed coefficients; and
- during each stage, each butterfly operation combines a pair of coefficients among the N coefficients, using a NTT twiddle factor to progressively transform the pair of coefficients and uses at least one mask-related twiddle factor in such a way that, during all intermediate stages of the NTT computation, the coefficients of each pair of coefficients combined within a butterfly operation are masked with:
- two respective input masks, independent from one another, in input of the butterfly operation;
- a same output mask in output of the butterfly operation, independent from said two input masks,

the at least one mask-related twiddle factor being based on the two input masks and on the output mask.

The present method is a computer-implemented method. It can be executer by at least one processor and/or a computing device.

In an embodiment, the NTT and mask-related twiddle factors are used as multiplication factors to multiply the coefficients.

In an embodiment, the N coefficients of the at least one polynomial belonging to an integer ring $\mathbb{Z}_q$ representing the integers modulo q, each NTT twiddle factor used in a butterfly operation is a primitive N-th root of unity $\omega$ modulo q raised by an exponent $k$, and said NTT twiddle factor $\omega^k$ belongs to the integer ring $\mathbb{Z}_q$ and changes according to the stage of the NTT computation and indices of the coefficients combined within the butterfly operation.

In an embodiment, each mask of the two input masks and output mask is the primitive N-th root of unity $\omega$ raised by an exponent ($i, j, m$), and is a random or pseudo-random element within the integer ring $\mathbb{Z}_q$.

In an embodiment, in a butterfly operation of an intermediate stage of the NTT computation, $i, j$ being the exponents of the two input masks and m being the exponent of the output mask, the butterfly operation uses two mask-related twiddle factors $\omega^{m-i}$ and $\omega^{m-j}$ so as to multiply one coefficient of the pair of coefficients by a factor $\omega^{m-i}$ and the other coefficient of the pair of coefficients by another factor $\omega^{m+k-j}$.

In an embodiment, the (each) butterfly operation can include:

- a first multiplication of one coefficient of the pair of coefficients by the factor $\omega^{m-i}$ to obtain T1;
- a second multiplication of the other coefficient of the pair of coefficients by the other factor $\omega^{k+m-j}$ to obtain T2;
- an addition of T1 and T2;
- a subtraction of T2 from T1.

Advantageously, the butterfly operations can be grouped into blocks of at least two butterfly operations where all the butterfly operations within a same block have a same combination of masks in input and output at each stage of the NTT computation.

In an embodiment, a spacing between the coefficients combined within a butterfly operation during a given stage being divided by a factor 2 during the next stage, the NTT computation uses:

- first blocks of size B that each includes B butterfly operations that are sequential by butterfly indices, if the spacing is greater than the block size B;
- second blocks of size B that each includes B butterfly operations that are not sequential by butterfly indices, if the spacing is equal or lower than the block size B.

In an embodiment, at the first stage of the NTT computation, the coefficients of each pair of coefficients combined within a butterfly operation can be unmasked in input and masked with a same mask in output.

Advantageously, at the last stage of the NTT computation, the coefficients of each pair of coefficients combined within a butterfly operation are masked in input with two respective masks, independent from one another, and unmasked in output.

The integer q may be a prime number or an integer such that a primitive N-th root of unity exists in $\mathbb{Z}_q$.

The present disclosure also concerns a method for executing a cryptographic operation including an Inverse Number Theoretic Transform, INTT, computation that transforms at least one polynomial with N coefficients from a frequency-domain representation to a time-domain representation, wherein

- the INTT computation is divided into successive stages of butterfly operations that progressively combine coefficients, starting from the N coefficients in the frequency domain, up to N transformed coefficients in the time domain; and

- during each stage, each butterfly operation combines a pair of coefficients using a INTT twiddle factor to progressively transform the coefficients and uses at least one mask-related twiddle factor in such a way that, during all intermediate stages of the NTT computation, the coefficients of each pair of coefficients combined within a butterfly operation are masked with:
- a same input mask in input of the butterfly operation;
- two respective output masks, independent from one another and from the input mask, in output of the butterfly operation;

the at least one mask-related twiddle factor being based on the input mask and the two output masks.

The present disclosure also concerns:

- a device comprising means for carrying out the steps of the above defined method;
- a computer program comprising instructions which, when the program is executed by a computer, cause the computer to carry out the steps of this method;
- a computer-readable medium comprising instructions which, when executed by a computer, cause the computer to carry out the steps of this method.

BRIEF DESCRIPTION OF THE DRAWINGS

Other features, purposes and advantages of the disclosure will become more explicit by means of reading the detailed statement of the non-restrictive embodiments made with reference to the accompanying drawings.

Figure 1 shows a DISO-DIT butterfly structure (on the left) and a SIDO-DIF butterfly structure (on the right), according to the present disclosure.

Figure 2 shows a DIT butterfly (on the left) and a DIF butterfly (on the right), according to the prior art.

Figure 3 shows butterfly operations of an NTT of size 16 using four blocks of butterfly operations, according to an example of the present disclosure.

Figure 4A represents an example of a mask link graph for an NTT of size 64 with four blocks of butterflies of block size 16 (i.e., each block includes 16 butterflies), the blocks being unmixed, including sequential butterflies, during all stages of the NTT computation, according to.

Figure 4B represents another example of a mask link graph for an NTT of size 64 with four mask blocks of butterflies of size 16, the blocks being unmixed, including sequential butterflies, during the initial stages of the NTT computation and mixed, including non-sequential butterflies, during later stages of the NTT computation.

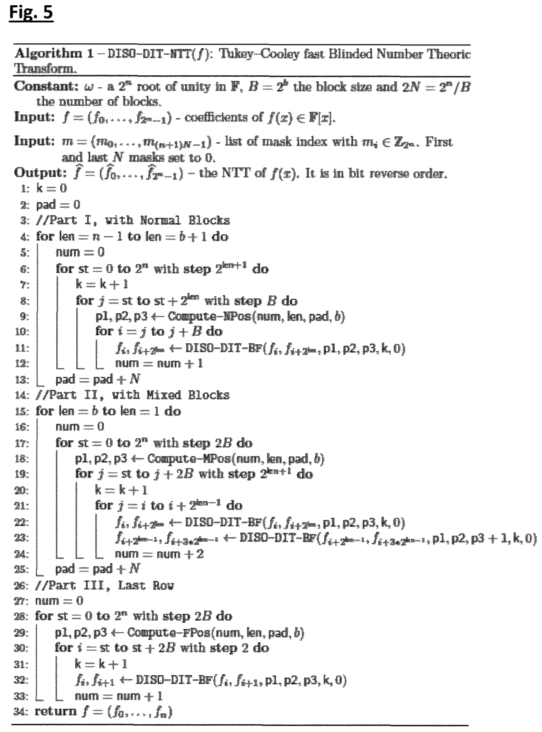

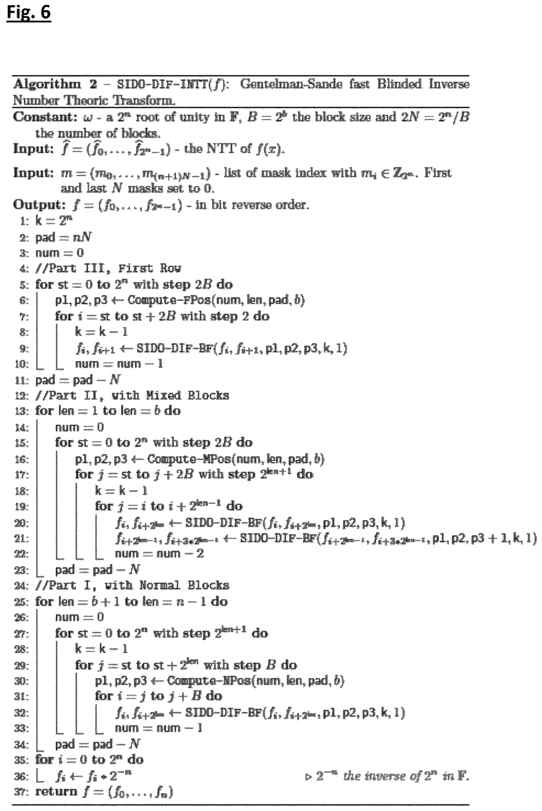

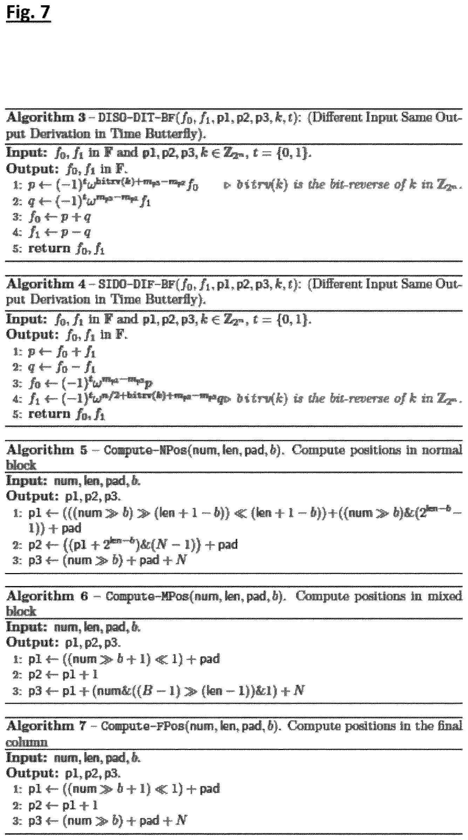

Figures 5-7 represent examples of pseudocodes for computing different DISO-DIT and SIDO-DIF algorithms, according to the present approach.

DETAILED DESCRIPTION

In 2023, the National Institute of Standards and Technology (NIST) published the first post-quantum cryptography candidates for standardization. Among these, three cryptographic schemes are based on lattice-based cryptography: CRYSTALS-Kyber, CRYSTALS-Dilithium, and Falcon. The development and deployment of implementations that are both correct and protected against side-channel attacks have become essential. These secure implementations need to be low-cost and efficient, especially since these cryptographic protocols will likely be employed on various Internet of Things (IoT) devices.

Lattice-based cryptography, due to the novel structure compared to traditional cryptographic systems is susceptible to new types of side-channel attacks in addition to all existing and well-known side channel attacks. One of the most significant and effective families of attacks is the Soft Analytical Side-Channel Attack (SASCA), which targets a mechanism of lattice-based cryptographic schemes: the Number Theoretic Transform (NTT). The NTT is a linear transformation used to perform efficient polynomial multiplications in finite fields, and the implementation is important for the performance of lattice-based cryptographic schemes.

The computation of NTT (Number Theoretic Transform) in cryptographic algorithms often uses a butterfly operation or unit, also simply referred as a butterfly, to efficiently perform the necessary arithmetic operations. The butterfly operation refers to a pattern of data flow and operations that repeatedly, progressively combine data elements, through successive stages of computation, to perform the transform correctly and efficiently. In each stage of the NTT computation, a plurality of butterfly operations or units are executed, and each butterfly operation or unit processes a pair of data elements, each pair undergoing specific mathematical operations, such as additions and multiplications by twiddle factors, distributes back the results into a data array in a manner that prepares them for the next stage.

Existing countermeasures to SASCA on the NTT include blinding in time and blinding in data. Blinding in time introduces time delays and random shuffling of different butterflies within the NTT, increasing the complexity of the correlation between side-channel information and the internal computations. This approach significantly complicates the implementation, requires extensive random shuffling, and disrupts the constant-time properties desirable in cryptosystems. Blinding in data masks the butterflies (i.e., the butterfly operations) by computing them up to a factor, which includes a root of unity. This method counteracts SASCA attacks by adding loops within the belief propagation (BP) factor graph, hindering the convergence of the belief propagation factor graph. Despite this, the method requires numerous additional multiplications, which can slow down the protocol significantly, potentially increasing computation time by up to four times.

The present approach pushes further the idea of blinding in data by improving the efficiency and resistance against SASCA.

The present disclosure proposes a method for executing a cryptographic operation including a Number Theoretic Transform (NTT) computation that transforms at least one polynomial with N coefficients from a time-domain representation to a frequency-domain representation. The NTT computation is divided into successive stages of butterfly operations that progressively (i.e., stage by stage) combine coefficients, starting from the N coefficients of the polynomial, up to N transformed coefficients. During each stage of the NTT computation, each butterfly operation combines a pair of coefficients (or data elements) among the N coefficients (or data elements), using a NTT twiddle factor to progressively transform or update the pair of coefficients, so as to correctly transform the polynomial coefficients from the time domain to the frequency domain through the different stages. Each of the butterfly operations uses at least one mask-related twiddle factor in such a way that, during all intermediate stages of the NTT computation (i.e., between the first stage and the last stage of the NTT computation), the coefficients of each pair of coefficients or data elements combined within a butterfly operation are masked with two respective input masks, independent from one another, in input of the butterfly operation, and with a same output mask in output of the butterfly operation, independent from the two input masks. The at least one mask-related twiddle factor is based on the two input masks and the output mask.

The method or process may further include at least part of the following steps:

1. During each stage of the NTT computation, a stride of the stage is determined, which is a spacing or distance between two input elements of the butterflies. When the process moves from one stage to the next stage, the stride can be divided by two. The stride can be initially set to N/2 in the first stage.

2. The butterflies or butterfly operations in a stage can be indexed by butterfly indices, for example from 0 to $N/2 - 1$, grouped into blocks of at least two butterfly operations where all the butterfly operations within a same block have a same combination of masks in input and output, at each stage of the NTT computation. All blocks can have a same size (i.e., a same number of butterfly operations within a block).

3. If the stride is greater than the block size, the butterflies are arranged into first blocks that each include butterfly operations that are sequential by their butterfly indices. If the stride is equal or less than the block size, the butterflies are arranged into second blocks that each include butterfly operations that are not sequential by their butterfly indices.

4. The process uses the NTT twiddle-factor and mask-related twiddle factors (that are computed or pre-computed) as multiplication factors to multiply the coefficients within each butterfly operation.

5. The butterfly operations are executed, updating the polynomial coefficients (i.e., progressively transforming them) and applying masks during the successive stages.

6. When the process moves from one stage to the next stage, the stride is divided by two as previously indicated, and the process repeats the above steps for the next stage until the stride is equal to 1.

The method ensures that the coefficients of each pair of coefficients combined within a butterfly operation are masked with two respective input masks, independent from one another, in input of the butterfly operation, and a same output mask, in output of the butterfly operation, independent from the two input masks. The independence (or lack of correlation) between the input and output masks of each butterfly operation through all the intermediate stages of the NTT computation complicates the correlation between side-channel information and the internal computations, enhancing the security of the cryptographic implementation.

The present disclosure also concerns a method for executing a cryptographic operation including an Inverse Number Theoretic Transform (INTT) computation that transforms at least one polynomial with N coefficients from a frequency-domain representation to a time-domain representation. The INTT computation is divided into successive stages of butterfly operations that progressively combine coefficients, starting from the N coefficients in the frequency domain, up to N transformed coefficients in the time domain. During each stage, each butterfly operation combines a pair of coefficients using an INTT twiddle factor to progressively transform, or update, the pair of coefficients and uses at least one mask-related twiddle factor in such a way that, during all intermediate stages of the INTT computation, the coefficients of each pair of coefficients combined within a butterfly operation are masked with a same input mask in input of the butterfly operation and two respective output masks, independent from one another and from the input mask, in output of the butterfly operation. The at least one mask-related twiddle factor is based on the input mask and the two output masks.

The proposed method provides a secure and efficient implementation of the NTT and INTT computations in lattice-based cryptographic schemes, enhancing their resistance against SASCA while maintaining low-cost and efficiency requirements.

In the present disclosure, the following abbreviations and notations are used:

- q is an integer, for example a prime number (but not necessarily);

- $\mathbb{Z}_q$ is the ring of integers modulo q (i.e., the integers {0, 1, 2, ..., q-1}),

- $\mathbb{Z}_N$ is the ring of integers modulo N (i.e., the integers {0, 1, 2, ..., N-1}),

- $\mathbb{Z}_q[y]/(f)$ represents a ring of integer polynomials modulo f, where f represents a polynomial, that may be referred as a "reduction polynomial". For example, $f = y^N + 1$, where $y$ is an indeterminate or variable used to construct polynomials and $N$ is an integer representing a polynomial degree. In another example, $f = y^N - 1$. The elements of $\mathbb{Z}_q[y]/(f)$ can be represented by integer polynomials of degree less than N with coefficients reduced modulo q. The polynomials in $\mathbb{Z}_q[y]/(f)$ can be expressed by the general form as follows: $x[0] + x[1]y + x[2]y^2 + \cdots + x[N-1]y^{N-1}$, where $x[i]$ with $i = 0, ..., N - 1$ represent polynomial coefficients in $\mathbb{Z}_q$,

- NTT: Number Theoretic Transform,

- INTT: Inverse NTT,

- $\omega$ is a primitive root of unity of order N, also referred as a primitive N-th root of unity, in $\mathbb{Z}_q$, with $(\omega)^N \equiv 1\ mod\ q$ and $(\omega)^M \not\equiv 1\ mod\ a$ for all M<N.

In a variant, q may be an integer that is such that a primitive N-th root of unity exists in $\mathbb{Z}_q$.

The present disclosure concerns a method for executing a cryptographic operation including a blinded NTT computation applied on at least one polynomial, for example from $\mathbb{Z}_q[y]/(f)$, such as a polynomial that can be expressed by $x[0] + x[1]y + x[2]y^2 + \cdots + x[N-1]y^{N-1}$, to transform the polynomial from its time-domain representation with original coefficients such as $x[0], x[1], ..., x[N-1]$ to its frequency-domain representation with transformed coefficients such as $\hat{x}[0], \hat{x}[1], ..., \hat{x}[N-1]$, where [0], [1], ..., [N-1] represent the ordered indices of the coefficients. The index of a coefficient can correspond to the power of the variable that is multiplied by this coefficient in the polynomial in the time domain. The NTT computation is divided into successive stages of butterfly operations, also referred as computation stages, that progressively (i.e., stage by stage) combine coefficients, starting from the N coefficients of the polynomial (in the time domain), up to N transformed coefficients (in the frequency domain).

Each computation stage includes N/2 butterflies or butterfly operations with a given stride, where the N/2 butterflies update or process or combine the coefficients. The stride determines the spacing or distance between two input elements or data (here coefficients) of the butterflies or butterfly operations and each butterfly operation is based on a same butterfly structure that includes addition, subtraction, and multiplication by twiddle factors, as explained below.

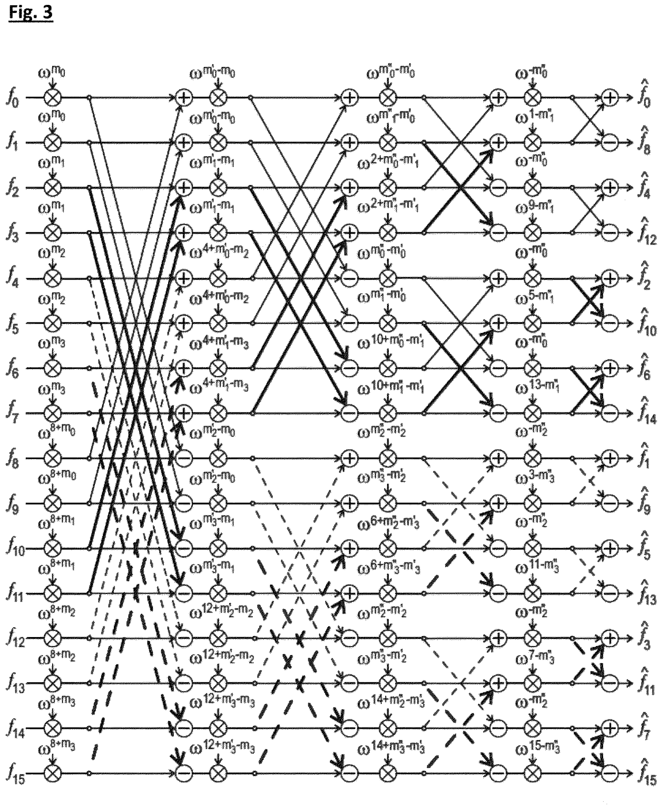

In each stage, the N/2 butterfly operations can be indexed by butterfly indices for example from 0 to N/2 - 1. Let's consider the N polynomial coefficients in time domain ordered from 0 to N, the N/2 butterfly operations are stacked or layered or sequential by the indices of the polynomial coefficients processed by these butterfly operations, as shown in figure 3. The N/2 butterfly operations or butterflies are thus stacked or layered in each stage and can be indexed from 0 to N/2 - 1 according to their position in the stack (or layer) in each stage. It should be noted that the different butterfly operations in a given stage can be executed in parallel, successively or in any order.

During a first stage of the NTT computation, the stride is N/2 (for all butterflies during this first stage) and the input elements of the butterfly operations can be the polynomial coefficients, for example $x[0], x[1], ..., x[N-1]$.

During any subsequent stage of the NTT computation, the stride of said computation stage is equal to the stride of the previous computation stage divided by a factor of two and the input elements of the butterflies or butterfly operations include the (updated) coefficients produced as output of the butterfly operations during the previous stage.

During a last stage of the NTT computation, the stride of this last stage can be equal to 1. At this last stage, the output elements of the butterfly operations can be the transformed polynomial coefficients, for example $\hat{x}[0]$, $\hat{x}[1]$, ..., $\hat{x}[N-1]$.

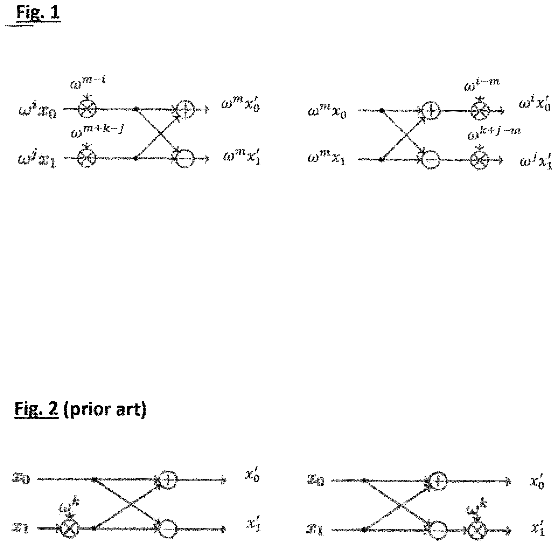

The present butterfly operation or structure or unit is represented in figure 1. It is a masking or blinded butterfly structure that is based on the known DIT butterfly structure represented in figure 2 but differs from it by features that will be described below. The left parts in figures 1 and 2 represent butterfly operations as used in a NTT computation, while the right parts in figures 1 and 2 represent butterfly operations as used in a INTT or Inverse-NTT computation.

In the present disclosure, the blinded NTT computation consists, similarly to the document "On Configurable SCA Countermeasures Against Single Trace Attacks for the NTT" by P. Ravi, R. Poussier, S. Bhasin and A. Chattopadhyay, to use masked butterflies inside the NTT computation, but different ones.

Each butterfly operation or unit is intended to:

-    process, combine a pair of coefficients among the N coefficients, as input elements, to progressively transform or update this pair of coefficients, and
-    produce the pair of updated coefficients, as output elements.

In the present disclosure, during each stage, each butterfly operation combines a pair of coefficients using a NTT twiddle factor to progressively transform or update this pair of coefficients and uses at least one mask-related twiddle factor in such a way that, during all intermediate stages of the NTT computation (i.e., between the first stage and the last stage), the coefficients of each pair of coefficients combined within a butterfly operation are masked with two respective input masks, independent from one another, in input of the butterfly operation, and with a same output mask in output of the butterfly operation, independent from said two input masks. The expression "to progressively transform or update the coefficients" reflects a step-by-step or partial transformation of the coefficients as the coefficients are gradually altered, stage-by-stage during the NTT computation. The mask-related twiddle factor(s) is/are based on the two input masks and the output mask.

The term "independent" means that the masks are determined independently of each other and are consequently independent from one another or uncorrelated. As a result, the masks are generally different from one another but may accidentally be identical. The NTT and mask-related twiddle factors are used as multiplication factors to multiply the coefficients within the butterfly operation.

In an embodiment, each NTT twiddle factor used in a butterfly operation is a primitive N-th root of unity $\omega$ modulo q raised by an exponent k, referred as a NTT exponent. This NTT twiddle factor $\omega^k$ belongs to the integer ring $\mathbb{Z}_q$ and changes according to the stage of the NTT computation and indices of the coefficients combined within the butterfly operation. The exponent k can be an element of the integer ring . The butterfly operation includes a multiplication of one coefficient of the pair of coefficients in input by this NTT twiddle factor $\omega^k$ and a combination of the coefficients. This multiplication by the twiddle factor $\omega^k$ is well-known, as it is similarly executed within the known DIT butterfly operation represented in figure 2.

In an embodiment, each mask (input masks or output mask) is the primitive N-th root of unity $\omega$ raised by a specific, respective exponent ($i, j,$ or $m$) referred as a masking exponent. Each of the masking exponents $i, j, m$ can be randomly or pseudo-randomly determined or selected in the integer ring $\mathbb{Z}_N$. For each butterfly operation executed during an intermediate stage of the NTT computation, the two input masks are the primitive N-th root of unity $\omega$ respectively raised by two exponents $i, j$, that are independent from each other, and the output mask is the primitive N-th root of unity $\omega$ raised by another exponent $m$ that is independent from the two exponents $i, j$. Each of the masks $\omega^i, \omega^j, \omega^m$ is an element in $\mathbb{Z}_q$. The exponents $i, j, m$, that are random or pseudo-random elements in $\mathbb{Z}_N$, are generally different from each other but may accidentally (or fortuitously) be identical.

At the first stage of the NTT computation, the coefficients of each pair of coefficients combined within each butterfly operation can be unmasked in input and masked in output with an output mask. Optionally, the coefficients in input of the butterfly operations at the first stage may already be masked with input masks.

At the last stage of the NTT computation, the coefficients of each pair of coefficients combined within each butterfly operation are masked in input with two respective input masks, independent from one another, and can be unmasked in output. Optionally, the coefficients in output of the butterfly operations at the last stage may be masked with output masks.

In an embodiment, the present blinded NTT computation only uses DISO-DIT butterflies. However, this DISO-DIT butterflies could also be used as a SISO-DIT (Same Input Same Output - Decimation in Time) butterflies, if the input values are the same. In this way, the butterfly operations can be computed using only two multiplications, while handling three twiddle factors.

With reference to figure 1 (left part), the input and output elements of a masking or blinded butterfly operation as executed in the NTT computation according to an embodiment can be described as follows:

- the first input element of the blinded butterfly operation is the product $\omega^i x_0$ as shown in figure 1 (left part), which includes a first input coefficient $x_0$ (original in time domain or updated) among the N coefficients multiplied by the mask $\omega^i$ that is the root of unity $\omega$ raised by the masking exponent $i$ (from a previous masking butterfly);
- the second input element of the blinded butterfly operation is the product $\omega^j x_1$ as shown in figure 1 (left part), which includes a first input coefficient $x_1$ (original in time domain or updated) among the N coefficients multiplied by the mask $\omega^j$ that is the root of unity $\omega$ raised by the masking exponent $j$ (from a previous masking butterfly), the exponents $j$ and $i$ being independent from one another; - the two output elements of the blinded butterfly operation are the product $\omega^m x_0'$ and the product $\omega^m x_1'$, where $x_0'$ and $x_1'$ are the two updated coefficients produced by the butterfly or butterfly operation and $\omega^m$ is the output mask (currently applied by said butterfly), m being the masking exponent.

This masking exponent m corresponds to a specific mask applied by this specific masking or blinded butterfly operation.

The masking exponents can be random or pseudo-random integers from the integer ring $\mathbb{Z}_N$, except for the input masking exponents $i$ and $j$ at the first stage that can be set to 0, and the output masking exponents $m$ at the last computation stage that can be set to 0. However, the output masking exponents $m$ at the last computation stage could be different from 0, to mask the transformed coefficients, as previously explained. In the same manner, the input masking exponents $i$ and $j$ at the first computation stage can be different from 0 if the original coefficients (in time domain) are already masked, as previously explained.

As shown in figure 1 (left part), the masking butterfly operation intended to apply the mask $m$ includes two multiplications, one addition and one subtraction. In an embodiment, this butterfly operation can include:

- a first multiplication of the first input element (first input coefficient) by a mask-related twiddle factor that is the root of unity $\omega$ exponent $m - i$ (i.e., by the factor $\omega^{m-i}$) which result is T1;
- a second multiplication of the second input element (first input coefficient) by the twiddle factor that is the root of unity $\omega$ exponent $k + m - j$ (i.e., by the factor $\omega^{k+m-j}$ that is the product of the NTT twiddle factor $\omega^k$ and the mask-related twiddle factor $\omega^{m-j}$) which result is T2;
- an addition of T1 and T2 to obtain a first output element (first output coefficient of same index as the first input coefficient);
- a subtraction of T2 from T1 to obtain a second output element (second output coefficient of same index as the second input coefficient).

This masking butterfly operation executed can be expressed as follows:

$$T1 = \omega^{m-i} \times X[a];$$

$$T2 = \omega^{k+m-j} \times X[a+l];$$

$$X'[a] = T1 + T2;$$

$$X'[a+l] = T1 - T2;$$

where:

- a is a coefficient index, with a=0, 1, ..., N-1;
- $l$ is the stride of the current computation stage (i.e., the spacing or length or distance between two input elements of the butterfly operations at the current computation stage);
- $X[a] = \omega^i \times x[a]$, represents an input polynomial coefficient $x[a]$ among the N coefficients (that can be an original polynomial coefficient in time domain at the first stage or an updated polynomial coefficient at a subsequent stage) multiplied by the input mask $\omega^i$ that is the primitive N-th root of unity $\omega$ exponent a previous masking exponent $i$ (with $i = 0$ at the first computation stage);

- $X[a + l] = \omega^j \times x[a + l]$, represents an input polynomial coefficient $x[a + l]$ among the N coefficients (that can be an original polynomial coefficient in time domain at the first stage or an updated polynomial coefficient at a subsequent stage) multiplied by the input mask $\omega^j$ that is the primitive N-th root of unity $\omega$ exponent a previous masking exponent $j$ (with $j = 0$ at the first computation stage);

- $X'[a] = \omega^m \times x'[a]$, represents the first output element of the masking butterfly structure, which corresponds to the updated or newly updated value of the polynomial coefficient $x[a]$ multiplied by the output mask $\omega^m$ that is the primitive N-th root of unity $\omega$ exponent the current mask $m$ specific to the current butterfly operation;

- $X'[a + l] = \omega^m \times x'[a + l]$, represents the second output element of the masking butterfly structure, which corresponds to the updated or newly updated value of the polynomial coefficient $x[a + l]$ multiplied by the output mask $\omega^m$ that is the primitive N-th root of unity $\omega$ exponent the current mask m specific to the current butterfly operation.

In an embodiment, the butterfly operations (or butterflies) can be grouped into blocks, where all the butterfly operations within a same block have a same combination of masks in input and output during each stage of the NTT computation.

Advantageously, to further simplify the computations, the size of each block may be fixed through all stages of the NTT computation. For example, this size may be a power of two. The size of the blocks, or block size, denoted B can be defined as the number of butterfly operations (or butterflies) included in a block.

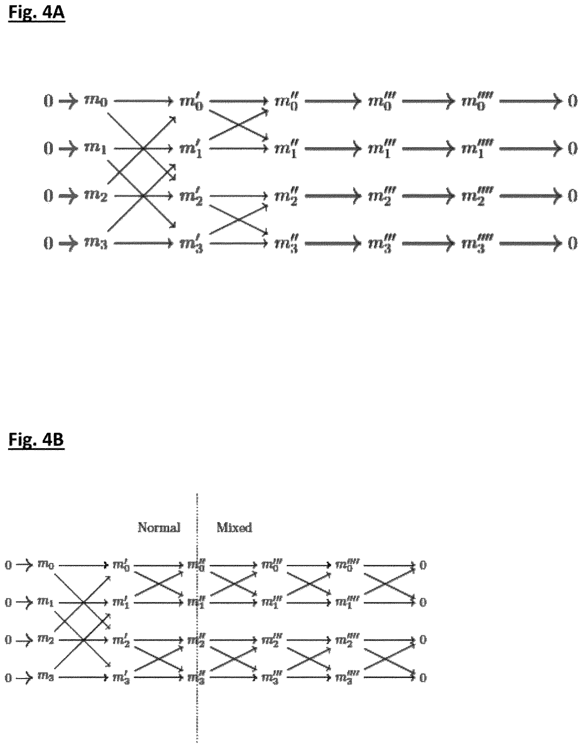

Figures 4A and 4B show two different graphs of links between masks at different, successive stages of the NTT computation, according to two examples. The triplet of masks $(\omega^i, \omega^j, \omega^m)$, or the triplet of masking exponents $(i, j, m)$, can be the same for all the butterflies of the same block at a given stage of the NTT computation. This triplet may change at each stage, but there may be a link between the different triplets of a same block used in different stages. For example, the triplet of masks used in the first block during the first stage in each of figures 4A and 4B is $(0, 0, m_0)$, while this triplet of masks used in this first block during the second stage is ( $m_0, m_2, m'_0$ ). These two triplets are linked by the mask $m_0$.

During the first stage of the NTT computation, and during each subsequent or later stage, if the stride of said stage (i.e., the spacing or distance between the input elements of the butterfly operations) is more than the size of the blocks (i.e., if $B > 1$), each block include $B$ butterfly operations that are sequential or follow one another by their butterfly indices. This is illustrated in figure 3 that shows the butterfly operations of the NTT computation of a N-1 degree polynomial with N=16 coefficients and a block size $B = 2$. In Figure 3 (on the left part), during each stage, in each block, the two butterfly operations of this block are sequential or adjacent by their butterfly indices. For example, in each of the first and second stage, butterflies $bf_0$ and $bf_1$ are within $Block_0$, the butterflies $bf_2$ et $bf_3$ are within $Block_1$, etc. The blocks of butterflies if - > 1 will be referred as "first blocks". $B$

If during a stage of the NTT computation, the stride of said computation stage becomes equal or less than the size of the blocks (i.e., if $\dfrac{l}{B} \leq 1$ ), the butterfly operations are arranged into different types of blocks, that will be referred as "second blocks". The second blocks still each include $B$ butterfly operations but these $B$ butterfly operations are not sequential by their butterfly indices. For example, to create the second blocks, the butterfly operations of the first blocks are mixed between two first blocks that are sequential or adjacent by their block indices, as illustrated in figure 3 (on the right part). As shown on the right part in this figure, the two butterflies of a same block are not sequential by their butterfly index but are separate from one another by a butterfly belonging to another block. For example, in each of the third and fourth stage, the butterflies $bf_0$ and $bf_2$ are within $Block_0$, the butterflies $bf_1$ et $bf_3$ are within $Block_1$, etc.

If a random mask is used for every butterfly inside the NTT computation, it would be required to sample up to random 6144 bits per NTT in ML-KEM and up to 8064 bits per NTT in ML-DSA, in case of a polynomial with N=256 coefficients. This would significantly temper the performance. The use of the blocks allows to address this issue. To compute the NTT, butterflies are arranged into blocks and every butterfly in a block has the masks, here the same raised twiddle factors, in input and output. Furthermore, to simplify the computation, the size of the blocks is a power of two and is fixed throughout the NTT computation. Using blocks, it is required to sample far less randomness. More specifically, for a block size of $B$, it is only required to sample $8 * 6 * 128/B$ bits of randomness for ML-KEM and $9 * 7 * 128/B$ bits for ML-DSA.

As the size of the blocks is a power of two, implementing the logic to keep track of the different raised twiddle factors can be efficiently done using 8-bit or 9-bit additions, together with bit shifts. Furthermore, the links between the previous blocks inside the NTT is representable itself as an NTT diagram of length 7 and of height $\log_2 128/B$, making it easy to construct and to control.

Figure 4A represents a mask link graph for an NTT computation of size N=64 with 4 blocks and all blocks include butterfly operations that are sequential by their indices through all stages. The inherent problem with masking by block in such a way is that the butterflies that are performed during the later stages of the NTT, i.e., during the stages when the distance between the two inputs of the butterfly is smaller than the block size, have the same input masks on both of their input coefficients, which tempers the resistance to SASCA. This is represented by the double arrows on the right part of figure 4A (between $m_i''$ and $m_i'''$, between $m_i'''$ and $m_i''''$, and between $m_i''''$ and 0). This is due to the link between the different triplets of a same block used in different stages, previously evoked.

To circumvent this problem, illustrated in figure 4A in a specific example, without additional cost, as previously explained, the butterfly operations being indexed by butterfly indices from 0 to $N/2$ - 1 and the blocks being indexed by block indices from 0 to $B$ - 1, at each stage, the present NTT computation can use two types of blocks:

- first blocks: used while the distance $l$ between two inputs of the butterfly is greater that the block size $B$. These first blocks simply depend on the index of the butterfly. More specifically, the $i^{th}$ butterfly $bf_i$ belongs to the j-th block $Block_j$ (i.e., $bf_i \in Block_j$) if $\left\lfloor \dfrac{i}{B} \right\rfloor = j$ where the expression means that the variable $j$ takes the value of the quotient obtained by dividing $i$ by $B$, but without any fractional part;
- second blocks: used while the distance $l$ between two inputs of the butterfly is smaller than the block size $B$. In that case, the block appurtenance depends also on the spacing $l$ between the inputs of the butterfly. The $i^{th}$ butterfly $bf_i$ belongs to the $j^{th}$ block $Block_j$ (i.e., $bf_i \in Block_j$) if:

$$ j = 2 \left\lfloor \frac{i}{2B} \right\rfloor + \left( \left\lfloor \frac{2(i \& (B-1))}{l} \right\rfloor \& 1 \right) $$

where
- $j$ represents an index of a block with $j$ = 0,1, ..., $B$ - 1 ;
- $i$ represents an index of a butterfly operation within a given stage of the NTT computation, with $i$ = 0,1, ..., $N$ - 1 ;
- $B$ represents the size of the mask blocks;
- & represents the bitwise AND binary operation operating on binary representations of numbers;
- $\lfloor \phantom{x} \rfloor$ represents the floor function in mathematics, that takes a real number and returns the greatest integer that is less than or equal to that number.
- $l$ represents the stride or distance or spacing between the input elements within the butterflies.

The second blocks induce a shift in the different butterflies which ensures that the masks in input come from two different blocks, that can be in fact concomitant or sequential or adjacent by their block indices. In that case, the links between the masks at the different computation stages are shown in the graph of figure 4B.

An example of a detailed NTT computation is given below. The NTT is of size 256 (as in ML-KEM and ML-DSA). In other words, the cryptographic operation includes a NTT computation that is applied on at least one polynomial, from $\mathbb{Z}_q[y]/(f)$, to transform the polynomial from its time-domain representation with original coefficients $x[0], x[1], ... , x[N$ - 1], with N = 256, to its frequency-domain a representation with transformed coefficients $\hat{x}[0], \hat{x}[1], ... , \hat{x}[N$ - 1] through a succession of computation stages.

However, the present approach works for any size N that is a power of 2. As an illustrative and non-limitative example, figure 3 represents a diagram of the NTT computation according to the present approach for an NTT of size 16 (N=16) using four mask blocks.

The process first determines, or computes, all the twiddle factors (i.e., the exponents of the root of unity $\omega$, which includes all the random masking exponents of the root of unity $\omega$ and the NTT exponents k), that will be used in the NTT computations, and initialises $l$ = 128, where $l$ is the initial stride (spacing or distance between the input elements of the butterflies) used during the first stage.

First part of the NTT computation

The first part of the NTT computation is carried out while $\dfrac{l}{B} > 1$, i.e., if the distance between input elements of the butterflies is greater than the block size $B$.

During each stage, the set of all 128 butterflies are separated into different parts denoted $B^k$, where a butterfly in

$B^k$ uses the same NTT twiddle factor $\omega^k$.

Then each part $B^k$ is split into first blocks $B_b^k$ , where b represents a block's index. The process computes, for each of the butterflies of this block $Bb$, the input exponents $i, j$ (that could be denoted $i_b,j_b$) of the input masks, that correspond to the masking exponents at the previous stage (set to 0 at the first stage), together with the new masking exponent $m$ (that could be denoted $m_b$) of the specific mask applied by the butterfly. For each butterfly inside $Bb$, the computation is performed as follows:

$$x'[a] = \omega^{m-i}x[a] + \omega^{k+m-j}x[a+l]$$

$$x'[a+l] = \omega^{m-i}x[a] - \omega^{k+m-j}x[a+l]$$

where

    $x[a]$ and $x[a+l]$ are polynomial coefficients;
    $x'[a]$ and $x'[a+l]$ are the updated polynomial coefficients;
    $\omega$ is a primitive N-th root of unity (i.e., of order N);
    $i, j$ are the masking exponents of the masks in input;
    m is the masking exponent of the mask in output.

After computation of the butterflies during a stage, the process divides the stride $l$ (spacing or distance between the input elements of the butterflies) by two, and then goes to the next stage of the NTT computation. The operations as above defined are similarly performed but with the new stride during this next stage.

The above steps are repeated in loop during each stage of the NTT computation, as long as $\dfrac{l}{B} > 1$ .

Second part of the NTT computation

The second part of the NTT computation is carried out while $\dfrac{1}{B} \leq \dfrac{l}{B} \leq$ 1, i.e., if the distance between input elements of the butterflies is equal or less than the block size B and more or equal to one.

In the second part of the NTT computation, the butterflies are sorted, arranged into second or mixed blocks $B_b$, where b is the mask block's index as previously described.

As previously explained, a masked butterfly takes in input the elements $x_0$, $x_1$, and handles the masks $\omega^i, \omega^j, \omega^m$ (in other words, the masking exponents $i, j, m$ of $\omega$) and the value $k$ that is the exponent in the NTT twiddle factor $\omega^k$ of the butterfly required to multiply $x_1$. This value k is computed differently depending on the stage of the NTT:

-   For $l$ greater than the block size $B$ (first part of the NTT computation), the value k is fixed within each block.
-   For $l$ equal or smaller than the block size $B$ (second part of the NTT computation), the value k is not the same for each butterfly in a block.

As a result, in the first part of the NTT computation, the process computes first the value $k$ (to arrange the butterflies into parts $B^k$) and then handles the mask blocks $B_b^k$ within each part $B^k$, while in the second part of the NTT computation, the process first handles the blocks $B_b$, qualified as "mixed" as each $B_b$ mixes different values of $k$, and then handles the value $k$.

In the second part of the NTT computation, after sorting the butterflies into mixed blocks $B_b$, for each butterfly operation (or butterfly), the process computes the masking exponents $i, j$ (that could be denoted $i_b,j_b$) of the masks in input $\omega^i, \omega^j$ together with the new masking exponent $m$ of the mask $\omega^m$ applied by the present butterfly (that could be denoted $m_b$), $m$ being set to 0 for the last stage, if the transformed coefficient in the frequency domain are unmasked.

Then, the process splits each mixed block $B_b$ into blocks $Bb$, the block $B_b^k$ including the butterflies using the same factor $k$.

For each butterfly inside $B_b^k$ , the computation is performed:

$$x'[a] = \omega^{m-i}x[a] + \omega^{k+m-j}x[a+l]$$

$$x'[a+l] = \omega^{m-i}x[a] - \omega^{k+m-j}x[a+l]$$

where

x[a] and x[a + l] are polynomial coefficients;
x'[a] and x'[a + l] are the updated polynomial coefficients;
$\omega$ is the twiddle factor that is a primitive root of unity of order n;
i, j are the masking exponents of the masks $\omega^i$, $\omega^j$ in input;
m is the masking exponent of the mask $\omega^m$ in output.

After computation of the butterflies during each stage, the process divides the stride l (spacing or distance between the input elements of the butterflies) by two, before going to the next stage. The operations as above defined are similarly performed but with the new stride during the next stage.

The above steps are repeated in loop at each stage of the NTT computation, as long as $\frac{1}{B} \leq \frac{l}{B} \leq 1$ , until the distance l between the input elements of the butterflies is equal to 1. During this last stage (when l = 1), the butterfly operations output the transformed coefficients $\hat{x}[0]$, $\hat{x}[1]$, ..., $\hat{x}[N - 1]$,

Regarding how to compute k, the process can initialise $k_1$ at 1 and set k as the bit reverse of $k_1$. Once the process has finished a $B^k$, $k_1$ can be incremented by one.

The NTT computation that has been described above takes as input the unmasked polynomial coefficients (i.e., the entering masking exponent i, j of the twiddle factors are 0) outputs are also unmasked (i.e., the masking exponent m of the twiddle factors at the last computation stage is 0). However, this can easily be modified, to mask the transformed coefficients in output or take as inputs already masked coefficients.

It is also noted that the NTT computation outputs its factors in bit-reverse order, as shown in figure 3.

The transformed polynomial with the transformed coefficients $\hat{x}[0]$, $\hat{x}[1]$, ..., $\hat{x}[N - 1]$ can be used to execute the cryptographic operation and provide a result of the cryptographic operation. For example, the cryptographic operation can include a multiplication between two polynomials. This multiplication can be easily performed in the frequency domain, after applying the NTT on the two polynomials.

The present disclosure also concerns a method for executing a cryptographic operation including a blinded INTT computation to transform the polynomial from its frequency-domain a representation with transformed coefficients $\hat{x}[0]$, $\hat{x}[1]$, ..., $\hat{x}[N - 1]$ to its time-domain representation with original coefficients x[0], x[1], ... , x[N - 1] through a succession of computation stages. The blinded INTT process is directly derived from the blinded NTT process by applying the Telegen's principle, that ensure that the INTT is as efficient as the NTT and conserves the same structure and mechanism for the blinding. The main difference is that the inversion transforms the DISO-DIT butterflies used in the NTT computation into SIDO-DIF butterflies used in the INTT computation.

Therefore, the present disclosure also concerns a method for executing a cryptographic operation including an Inverse Number Theoretic Transform, INTT, computation that transforms at least one polynomial with N coefficients from its frequency-domain representation to its time-domain representation.

The INTT computation is divided into successive stages of butterfly operations that progressively (stage by stage) combine coefficients, starting from the N coefficients in the frequency domain, up to N transformed coefficients in the time domain. During each stage, each butterfly operation combines a pair of coefficients using a INTT twiddle factor to progressively transform or update the pair of coefficients and uses at least one mask-related twiddle factor in such a way that, during all intermediate stages of the NTT computation, the coefficients of each pair of coefficients combined within a butterfly operation are masked with:

- a same input mask in input of the butterfly operation;
- two respective output masks, independent from one another and from the input mask, in output of the butterfly operation;

the at least one mask-related twiddle factor being based on the input mask and the two output masks.

The diagram of figure 3 remains a valid representation of the INTT computation if it is read from right to left (instead of from left to right for the NTT computation). All the root unity multiplications are inversed.

With reference to figure 1 (right part), the input and output elements of a masking or blinded butterfly operation as executed in the INTT computation according to an embodiment can be described as follows:

- the first input element of the blinded butterfly operation is the product $\omega^m x_0$ as shown in figure 1 (right part), which includes a first input coefficient $x_0$ (original in frequency domain in first stage or updated in a later stage) among the N coefficients multiplied by the mask $\omega^m$ that is the root of unity $\omega$ raised by the masking exponent $m$ (from a previous masking butterfly);
- the second input element of the blinded butterfly operation is the product $\omega^m x_1$ as shown in figure 1 (right part), which includes a first input coefficient $x_1$ (original in frequency domain in first stage or updated in a later stage) among the N coefficients multiplied by the mask $\omega^m$ that is the root of unity $\omega$ raised by the masking exponent $m$;
- a first output element of the blinded butterfly operation is the product $\omega^i x_0'$ where $x_0'$ is one of the pair of updated coefficients produced by the butterfly operation and $\omega^i$ is the output mask, $i$ being the masking exponent; and
- a second output element of the blinded butterfly operation is the product $\omega^j x_1'$ where $x_1'$ is one of the pair of updated coefficients produced by the butterfly operation and $\omega^j$ is the output mask, $j$ being the masking exponent;

where the masks $\omega^m$, $\omega^i$, $\omega^j$ (or their exponents $m$, $j$ and $i$) are independent from one another.

As previously described for the NTT computation, the masking exponents $m, j$ and $i$ used in the INTT computation can be random or pseudo-random integers from the integer ring $\mathbb{Z}_N$, except for the input masking exponent $m$ at the first stage of the INTT computation that can be set to 0, and the output masking exponents $i, j$ at the last stage of the INTT computation that can be set to 0. However, the input masking exponent m at the first stage could be different from 0, if the coefficients in the frequency domain are masked, as previously explained. In the same manner, the output masking exponents $i$ and $j$ at the last stage can be different from 0 if the coefficients in the time domain are masked, as previously explained.

An example of the INTT computation process is given below:

The process first determines, or computes, all the twiddle factors (i.e., all the random masking exponents of the root of unity $\omega$, and the factor k), and initialises the stride or distance $l$ between input elements of the butterflies to one, in other words $l = 1$.

First part of the INTT computation

The first part of the INTT computation is carried out while $\dfrac{l}{B} \leq 1$, in other words if the distance between input elements of the butterflies is equal or less than the block size B.

In the first part of the INTT computation, the butterflies are arranged into mixed blocks $B_b$, as previously described.

For each butterfly operation (or butterfly), the process computes the new masking exponents $i$, j of the masks in output together with the old masking exponent m of the mask in input ($m$ being set to 0 during the first stage, if the transformed coefficients in the frequency domain are unmasked).

Then, the process splits the mixed blocks $B_b$ into blocks $B_b^k$, the block $B_b^k$ including the butterflies using the same NTT twiddle factor $\omega^k$.

For each butterfly inside $B_b^k$, the process performs the following computation:

$$x'[a] = -\omega^{i-m}(x[a] + x[a + l])$$

$$x'[a + l] = -\omega^{j+k-m}(x[a] - x[a + l])$$

where

$x[a]$ and $x[a + l]$ are the inputs of the butterfly and include polynomial coefficients;

*x'*[*a*] and *x'*[*a* + *l*] are the outputs of the butterfly and include polynomial coefficients;
$\omega$ is the primitive root of unity of order n;
*i, j* are the masking exponents of the masks $\omega^i$, $\omega^j$ in input;
m is the masking exponent of the mask $\omega^m$ in output.

After computation of the butterflies at each stage, the process multiplies the stride *l* (spacing or distance between the input elements of the butterflies) by two, and then goes to the next stage. The operations as above defined are similarly performed but with the new stride during the next stage.

Second part of the INTT computation

The second part of the INTT computation is carried out while $1 < \dfrac{l}{B} \leq \dfrac{128}{B}$, in other words if the distance between input elements of the butterflies is more than the block size B.

In the second part of the INTT computation, the 128 butterflies are split into blocks $B^k$, where the butterflies in $B^k$ use the same twiddle factor $\omega^k$.

Then, the process splits the blocks $B^k$ into blocks $B^k_b$, and, for each $B^k_b$, computes the new masking exponents *i, j* of the masks $\omega^i$, $\omega^j$ in output together with the old masking exponent m of the mask $\omega^m$ in input.

For each butterfly inside $B^k_b$, the process performs the following computation:

$$x'[a] = -\omega^{i-m}(x[a] + x[a + l])$$

$$x'[a+l] = -\omega^{j+k-m}(x[a] - x[a + l])$$

where

x[*a*] and x[*a* + *l*] are the inputs of the butterfly and include polynomial coefficients;
x'[*a*] and x'[*a* + *l*] are the outputs of the butterfly and include polynomial coefficients;
$\omega$ is a primitive root of unity of order n;
*i, j* are the masking exponents of the masks $\omega^i$, $\omega^j$ in input;
m is the masking exponent of the mask $\omega^m$ in output.

After computation of the butterflies at each stage, the process multiplies the stride *l* (spacing or distance between the input elements of the butterflies) by two, and then goes to the next stage. The same operations as above defined are similarly performed but with the new stride during the next stage.

The above steps are repeatedly executed until the value *l* = 128 is reached.

Regarding how to compute *k,* the process can initialise $k_1$ at 255 (or 127 in the case of ML-KEM) and set *k* as the bit reverse of $k_1$. Once the process has finished a $B^k$, $k_1$ can be incremented by one.

The present method(s) can be carried out by a computing device. This computing device may be implemented with hardware and software. It may include:

- at least one processor,
- a memory or storage system, that may include one or more memories (e.g., Read Only Memory (ROM), Read Access Memory (RAM), volatile memory, non-volatile memory, etc.),
- a random number generator for generating the random masks and/or masking exponents,
- a cryptographic module for executing one or more cryptographic operations.

The present disclosure also concerns:

- a computing device configured to perform the steps of the method previously defined;
- a computer program comprising instructions which, when the program is executed by a computer, cause the computer to carry out the steps of the method previously defined; and
- a computer-readable medium comprising instructions which, when executed by a computer, cause the computer to carry out the steps of the method previously defined.

The efficiency of the blinded NTT or INTT comes from the following points:

- The randomness inside the NTT makes it significantly harder from a practical side-channel perspective, though not impossible to identify the underlying targeted operations within the NTT and compute templates.
- The masks of each butterfly are randomly sampled at each step of the NTT, rendering the link between the different part of the NTT more complex.
- Finally, let's how the convergence of the BP algorithm can worsened, when used on our NTT.
- The function $f_{bf}$ no longer links xs to ys in a one-to-one manner and is in fact a surjection (It is exactly $2^{21}$ *to* 1). It is of the following form:

$$f_{bf}(x_a, x_{a+l}, y_a, y_{a+l}, i, j, m) = 1 \; or \; 0$$

*with*

$$1 \; \Leftrightarrow \; \left( y_i = \omega^{m-i} x_a + \omega^{k+m-j} x_{a+l} \right) and \left( y_{i+l} = \omega^{m-i} x_a - \omega^{k+m-j} x_{a+l} \right)$$

This therefore heavily tempers the propagation in the BP algorithm. Furthermore, we have that our different masks create numerous additional loops inside the factor graph that represent our NTT. Indeed, each twiddle values are linked to 3*B* distinct functions, that occurs prior, after, and concurrently in our NTT. Those additional links induce a more volatile propagation which further tempers the convergence of the BP algorithm.

Furthermore, the mask NTT has an interesting property, namely that it enables a more compact ML-DSA. This comes from the fact that the blinded NTT can be performed completely (as it is the case in ML-DSA) or incompletely (meaning that the last step is not performed, as in ML-KEM, a case that requires a slightly modified pointwise multiplication). It occurs that multiplying with the blinded NTT is more efficient when performed incompletely (saving 256 modular multiplications) but this also induce that we require to precompute only half of the roots of unity. In the case of ML-DSA, this induces a compactification by more than 1kB (a 5% improvement).

The solution has excellent properties, and its efficiency is almost independent from the block size. More specifically, apart from the randomness generation, the computations are performed with an efficiency that differs only slightly on the block size. In general, the NTT is only two times slower than an unprotected NTT, independently of the block size.

FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

Claims

1. A method for executing a cryptographic operation including a Number Theoretic Transform, NTT, computation that transforms at least one polynomial with N coefficients from a time-domain representation to a frequency-domain representation, wherein

    - the NTT computation is divided into successive stages of butterfly operations that combine coefficients, starting from the N coefficients of the polynomial, up to N transformed coefficients; and
    - during each stage, each butterfly operation combines a pair of coefficients among the N coefficients, using a NTT twiddle factor to progressively transform the pair of coefficients and uses at least one mask-related twiddle factor in such a way that, during all intermediate stages of the NTT computation, the coefficients of each pair of coefficients combined within a butterfly operation are masked with:
    - two respective input masks, independent from one another, in input of the butterfly operation;

- a same output mask in output of the butterfly operation, independent from said two input masks,

the at least one mask-related twiddle factor being based on the two input masks and on the output mask.

2. The method according to claim 1, wherein the NTT and mask-related twiddle factors are used as multiplication factors to multiply the coefficients.

3. The method according to claim 2, wherein, the N coefficients of the at least one polynomial belonging to an integer ring $\mathbb{Z}_q$ representing the integers modulo q, each NTT twiddle factor used in a butterfly operation is a primitive N-th root of unity $\omega$ modulo q raised by an exponent $k$, and said NTT twiddle factor $\omega^k$ belongs to the integer ring $\mathbb{Z}_q$ and changes according to the stage of the NTT computation and indices of the coefficients combined within the butterfly operation.

4. The method according to claim 3, wherein each mask of the two input masks and output mask is the primitive N-th root of unity $\omega$ raised by an exponent $(i, j, m)$, and is a random or pseudo-random element within the integer ring $\mathbb{Z}_q$.

5. The method according to claim 4, wherein, in a butterfly operation of an intermediate stage of the NTT computation, $i, j$ being the exponents of the two input masks and m being the exponent of the output mask, the butterfly operation uses two mask-related twiddle factors $\omega^{m-i}$ and $\omega^{m-j}$ so as to multiply one coefficient of the pair of coefficients by a factor $\omega^{m-i}$ and the other coefficient of the pair of coefficients by another factor $\omega^{m+k-j}$.

6. The method according to claim 5, wherein the butterfly operation includes:

   - a first multiplication of one coefficient of the pair of coefficients by the factor $\omega^{m-i}$ to obtain T1;
   - a second multiplication of the other coefficient of the pair of coefficients by the other factor $\omega^{k+m-j}$ to obtain T2;
   - an addition of T1 and T2;
   - a subtraction of T2 from T1.

7. The method according to any of claims 1 to 6, wherein the butterfly operations are grouped into blocks of at least two butterfly operations where all the butterfly operations within a same block have a same combination of masks in input and output at each stage of the NTT computation.

8. The method according to claim 7, wherein a spacing between the coefficients combined within a butterfly operation during a given stage being divided by a factor 2 during the next stage, the NTT computation uses:

   - first blocks of size B that each includes B butterfly operations that are sequential by butterfly indices, if the spacing is greater than the block size B;
   - second blocks of size B that each includes B butterfly operations that are not sequential by butterfly indices, if the spacing is equal or lower than the block size B.

9. The method according to any of claims 1 to 7, wherein, at the first stage of the NTT computation, the coefficients of each pair of coefficients combined within a butterfly operation are unmasked in input and masked with a same mask in output.

10. The method according to any of claims 1 to 8, wherein, at the last stage of the NTT computation, the coefficients of each pair of coefficients combined within a butterfly operation are masked in input with two respective masks, independent from one another, and unmasked in output.

11. The method according to any of claims 3 to 9, when dependent on claim 3, wherein q is a prime number or an integer such that a primitive N-th root of unity exists in $\mathbb{Z}_q$.

12. A method for executing a cryptographic operation including an Inverse Number Theoretic Transform, INTT, computation that transforms at least one polynomial with N coefficients from a frequency-domain representation to a time-domain representation, wherein

- the INTT computation is divided into successive stages of butterfly operations that progressively combine coefficients, starting from the N coefficients in the frequency domain, up to N transformed coefficients in the time domain; and

- during each stage, each butterfly operation combines a pair of coefficients using a INTT twiddle factor to progressively transform the coefficients and uses at least one mask-related twiddle factor in such a way that, during all intermediate stages of the NTT computation, the coefficients of each pair of coefficients combined within a butterfly operation are masked with:

- a same input mask in input of the butterfly operation;

- two respective output masks, independent from one another and from the input mask, in output of the butterfly operation;

the at least one mask-related twiddle factor being based on the input mask and the two output masks.

13. A device comprising means for carrying out the steps of a method according to any of claims 1 to 12.

14. A computer program comprising instructions which, when the program is executed by a computer, cause the computer to carry out steps of a method according to any of claims 1 to 12.

15. A computer-readable medium comprising instructions which, when executed by a computer, cause the computer to carry out the steps of a method according to any claims 1 to 12.

## Fig. 1

## Fig. 2 (prior art)

Fig. 3

**Fig. 4A**

**Fig. 4B**

## Fig. 5

Algorithm 1 – DISO-DIT-NTT($f$): Tukey–Cooley fast Blinded Number Theoric Transform.

**Constant:** $\omega$ - a $2^n$ root of unity in $\mathbb{F}$, $B = 2^b$ the block size and $2N = 2^n/B$ the number of blocks.

**Input:** $f = (f_0, \ldots, f_{2^n-1})$ - coefficients of $f(x) \in \mathbb{F}[x]$.

**Input:** $m = (m_0, \ldots, m_{(n+1)N-1})$ - list of mask index with $m_i \in \mathbb{Z}_{2^n}$. First and last $N$ masks set to 0.

**Output:** $\hat{f} = (\hat{f}_0, \ldots, \hat{f}_{2^n-1})$ – the NTT of $f(x)$. It is in bit reverse order.

```
k = 0
pad = 0
//Part I, with Normal Blocks
for len = n − 1 to len = b + 1 do
    num = 0
    for st = 0 to 2ⁿ with step 2^(len+1) do
        k = k + 1
        for j = st to st + 2^len with step B do
            p1, p2, p3 ← Compute-NPos(num, len, pad, b)
            for i = j to j + B do
                fᵢ, f_{i+2^len} ← DISO-DIT-BF(fᵢ, f_{i+2^len}, p1, p2, p3, k, 0)
                num = num + 1
    pad = pad + N
//Part II, with Mixed Blocks
for len = b to len = 1 do
    num = 0
    for st = 0 to 2ⁿ with step 2B do
        p1, p2, p3 ← Compute-MPos(num, len, pad, b)
        for j = st to j + 2B with step 2^(len+1) do
            k = k + 1
            for j = i to i + 2^(len−1) do
                fᵢ, f_{i+2^len} ← DISO-DIT-BF(fᵢ, f_{i+2^len}, p1, p2, p3, k, 0)
                f_{i+2^(len−1)}, f_{i+3*2^(len−1)} ← DISO-DIT-BF(f_{i+2^(len−1)}, f_{i+3*2^(len−1)}, p1, p2, p3 + 1, k, 0)
                num = num + 2
    pad = pad + N
//Part III, Last Row
num = 0
for st = 0 to 2ⁿ with step 2B do
    p1, p2, p3 ← Compute-FPos(num, len, pad, b)
    for i = st to st + 2B with step 2 do
        k = k + 1
        fᵢ, f_{i+1} ← DISO-DIT-BF(fᵢ, f_{i+1}, p1, p2, p3, k, 0)
        num = num + 1
return f = (f₀, …, fₙ)
```

## Fig. 6

---

**Algorithm 2** – SIDO-DIF-INTT($f$): Gentelman-Sande fast Blinded Inverse Number Theoric Transform.

---

**Constant:** $\omega$ - a $2^m$ root of unity in $\mathbb{F}$, $B = 2^b$ the block size and $2N = 2^n/B$ the number of blocks.

**Input:** $\hat{f} = (\hat{f}_0, \ldots, \hat{f}_{2^n-1})$ - the NTT of $f(x)$.

**Input:** $m = (m_0, \ldots, m_{(n+1)N-1})$ - list of mask index with $m_i \in \mathbb{Z}_{2^n}$. First and last $N$ masks set to 0.

**Output:** $f = (f_0, \ldots, f_{2^n-1})$ - in bit reverse order.

1:   $k = 2^n$
2:   pad $= nN$
3:   num $= 0$
4:   //Part III, First Row
5:   **for** st $= 0$ to $2^n$ with step $2B$ **do**
6:     p1, p2, p3 $\leftarrow$ Compute-FPos(num, len, pad, $b$)
7:     **for** $i =$ st to st $+ 2B$ with step 2 **do**
8:       $k = k - 1$
9:       $f_i, f_{i+1} \leftarrow$ SIDO-DIF-BF($f_i, f_{i+1}$, p1, p2, p3, k, 1)
10:      num $=$ num $- 1$
11: pad $=$ pad $- N$
12: //Part II, with Mixed Blocks
13: **for** len $= 1$ to len $= b$ **do**
14:    num $= 0$
15:    **for** st $= 0$ to $2^n$ with step $2B$ **do**
16:      p1, p2, p3 $\leftarrow$ Compute-MPos(num, len, pad, $b$)
17:      **for** $j =$ st to $j + 2B$ with step $2^{\text{len}+1}$ **do**
18:        $k = k - 1$
19:        **for** $j = i$ to $i + 2^{\text{len}-1}$ **do**
20:          $f_i, f_{i+2^{\text{len}}} \leftarrow$ SIDO-DIF-BF($f_i, f_{i+2^{\text{len}}}$, p1, p2, p3, k, 1)
21:          $f_{i+2^{\text{len}-1}}, f_{i+3*2^{\text{len}-1}} \leftarrow$ SIDO-DIF-BF($f_{i+2^{\text{len}-1}}, f_{i+3*2^{\text{len}-1}}$, p1, p2, p3 $+ 1$, k, 1)
22:          num $=$ num $- 2$
23:    pad $=$ pad $- N$
24: //Part I, with Normal Blocks
25: **for** len $= b + 1$ to len $= n - 1$ **do**
26:    num $= 0$
27:    **for** st $= 0$ to $2^n$ with step $2^{\text{len}+1}$ **do**
28:      $k = k - 1$
29:      **for** $j =$ st to st $+ 2^{\text{len}}$ with step $B$ **do**
30:        p1, p2, p3 $\leftarrow$ Compute-NPos(num, len, pad, $b$)
31:        **for** $i = j$ to $j + B$ **do**
32:          $f_i, f_{i+2^{\text{len}}} \leftarrow$ SIDO-DIF-BF($f_i, f_{i+2^{\text{len}}}$, p1, p2, p3, k, 1)
33:          num $=$ num $- 1$
34:    pad $=$ pad $- N$
35: **for** $i = 0$ to $2^n$ **do**
36:    $f_i \leftarrow f_i * 2^{-n}$         $\triangleright$ $2^{-n}$ the inverse of $2^n$ in $\mathbb{F}$.
37: **return** $f = (f_0, \ldots, f_n)$

---

## Fig. 7

---

**Algorithm 3** – $\texttt{DISO-DIT-BF}(f_0, f_1, \text{p1}, \text{p2}, \text{p3}, k, t)$: (Different Input Same Output Derivation in Time Butterfly).

---

**Input:** $f_0, f_1$ in $\mathbb{F}$ and $\text{p1}, \text{p2}, \text{p3}, k \in \mathbb{Z}_{2^m}, t = \{0, 1\}$.
**Output:** $f_0, f_1$ in $\mathbb{F}$.
1: $p \leftarrow (-1)^t \omega^{\text{bitrv}(k) + m_{p3} - m_{p2}} f_0$     $\triangleright$ *bitrv(k) is the bit-reverse of $k$ in $\mathbb{Z}_{2^m}$.*
2: $q \leftarrow (-1)^t \omega^{m_{p3} - m_{p1}} f_1$
3: $f_0 \leftarrow p + q$
4: $f_1 \leftarrow p - q$
5: **return** $f_0, f_1$

---

**Algorithm 4** – $\texttt{SIDO-DIF-BF}(f_0, f_1, \text{p1}, \text{p2}, \text{p3}, k, t)$: (Different Input Same Output Derivation in Time Butterfly).

---

**Input:** $f_0, f_1$ in $\mathbb{F}$ and $\text{p1}, \text{p2}, \text{p3}, k \in \mathbb{Z}_{2^m}, t = \{0, 1\}$.
**Output:** $f_0, f_1$ in $\mathbb{F}$.
1: $p \leftarrow f_0 + f_1$
2: $q \leftarrow f_0 - f_1$
3: $f_0 \leftarrow (-1)^t \omega^{m_{p1} - m_{p2}} p$
4: $f_1 \leftarrow (-1)^t \omega^{m/2 + \text{bitrv}(k) + m_{p3} - m_{p2}} q$ $\triangleright$ *bitrv(k) is the bit-reverse of $k$ in $\mathbb{Z}_{2^m}$.*
5: **return** $f_0, f_1$

---

**Algorithm 5** – $\texttt{Compute-NPos}(\text{num}, \text{len}, \text{pad}, b)$. Compute positions in normal block

---

**Input:** $\text{num}, \text{len}, \text{pad}, b$.
**Output:** $\text{p1}, \text{p2}, \text{p3}$.
1: $\text{p1} \leftarrow (((\text{num} \gg b) \gg (\text{len} + 1 - b)) \ll (\text{len} + 1 - b)) + ((\text{num} \gg b) \& (2^{\text{len} - b} - 1)) + \text{pad}$
2: $\text{p2} \leftarrow ((\text{p1} + 2^{\text{len} - b}) \& (N - 1)) + \text{pad}$
3: $\text{p3} \leftarrow (\text{num} \gg b) + \text{pad} + N$

---

**Algorithm 6** – $\texttt{Compute-MPos}(\text{num}, \text{len}, \text{pad}, b)$. Compute positions in mixed block

---

**Input:** $\text{num}, \text{len}, \text{pad}, b$.
**Output:** $\text{p1}, \text{p2}, \text{p3}$.
1: $\text{p1} \leftarrow ((\text{num} \gg b + 1) \ll 1) + \text{pad}$
2: $\text{p2} \leftarrow \text{p1} + 1$
3: $\text{p3} \leftarrow \text{p1} + (\text{num} \& ((B - 1) \gg (\text{len} - 1)) \& 1) + N$

---

**Algorithm 7** – $\texttt{Compute-FPos}(\text{num}, \text{len}, \text{pad}, b)$. Compute positions in the final column

---

**Input:** $\text{num}, \text{len}, \text{pad}, b$.
**Output:** $\text{p1}, \text{p2}, \text{p3}$.
1: $\text{p1} \leftarrow ((\text{num} \gg b + 1) \ll 1) + \text{pad}$
2: $\text{p2} \leftarrow \text{p1} + 1$
3: $\text{p3} \leftarrow (\text{num} \gg b) + \text{pad} + N$

---

Europäisches
Patentamt
European
Patent Office
Office européen
des brevets

**EUROPEAN SEARCH REPORT**

Application Number

EP 24 19 5050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | RAVI PRASANNA ET AL: "On Configurable SCA Countermeasures Against Single Trace Attacks for the NTT", 22 December 2020 (2020-12-22), SECURITY, PRIVACY, AND APPLIED CRYPTOGRAPHY ENGINEERING; [LECTURE NOTES IN COMPUTER SCIENCE; LECT.NOTES COMPUTER], SPRINGER INTERNATIONAL PUBLISHING, CHAM, PAGE(S) 123 - 146, XP047690516, ISSN: 0302-9743 ISBN: 978-3-030-66625-5 [retrieved on 2020-12-22] | 1-6,9-15 | INV. H04L9/30 |
| A | * Sections 2, 3 * | 7,8 | |
| A | US 2023/254115 A1 (HAMBURG MICHAEL ALEXANDER [NL] ET AL) 10 August 2023 (2023-08-10) * paragraphs [0011] - [0014] * * paragraph [0022] - paragraph [0043]; figures 2-4 * | 1-15 | |

| | | | TECHNICAL FIELDS SEARCHED (IPC) |
|---|---|---|---|
| | | | H04L G06F |

The present search report has been drawn up for all claims

| Place of search | Date of completion of the search | Examiner |
|---|---|---|
| Munich | 28 January 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 5050

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| US 2023254115 | A1 | 10-08-2023 | CN | 115698938 A | 03-02-2023 |
| | | | EP | 4162355 A1 | 12-04-2023 |
| | | | US | 2023254115 A1 | 10-08-2023 |
| | | | WO | 2021252294 A1 | 16-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. PRIMAS** ; **P. PESSL** ; **S. MANGARD**. *Single-trace side-channel attacks on masked lattice-based encryption*
- **P. PESSL** ; **R. PRIMAS**. *More practical single-trace attacks on the number theoretic transform*

- **P. RAVI** ; **R. POUSSIER** ; **S. BHASIN** ; **A. CHATTOPADHYAY**. *On Configurable SCA Countermeasures Against Single Trace Attacks for the NTT*